(19) Europäisches Patentamt
European Patent Office
Office européen des brevets

(11) **EP 4 580 132 A1**

(12) **EUROPEAN PATENT APPLICATION**

(43) Date of publication:
**02.07.2025 Bulletin 2025/27**

(21) Application number: **24222908.6**

(22) Date of filing: **23.12.2024**

(51) International Patent Classification (IPC):
**H04L 25/02** (2006.01)

(52) Cooperative Patent Classification (CPC):
**H04L 25/0226**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.12.2023 EP 23220755**

(71) Applicant: **Stichting IMEC Nederland
5656 AE Eindhoven (NL)**

(72) Inventors:
• **SHEIKH, Alireza
5629 KH Eindhoven (NL)**
• **EL SOUSSI, Mohieddine
2300 Turnhout (BE)**

(74) Representative: **AWA Sweden AB
Matrosgatan 1
Box 5117
200 71 Malmö (SE)**

(54) **SIDELOBE REDUCTION IN WIRELESS RANGING**

(57) A method of generating a sequence of symbols for sidelobe reduction when the generated sequence of symbols is cross-correlated with a received sequence of symbols, said method comprising obtaining (100) a nominal sequence of symbols; determining (102) one or more sidelobes in the autocorrelation of said nominal sequence of symbols targeted for reduction; for a sidelobe of said one or more sidelobes targeted for reduction selecting (112) a bit of a symbol of said sequence of symbols; evaluating (114), whether modifying the selected bit would reduce said sidelobe without modifying any other sidelobe targeted for reduction; conditional on said evaluating, modifying the selected bit.

*Fig. 1*

**Description**

Technical field

The present inventive concept relates to a method of generating a sequence of symbols for sidelobe reduction when the generated sequence of symbols is cross-correlated with a received sequence of symbols, to a method employable in wireless ranging comprising the method of generating the sequence of symbols, and to a device a non-transitory computer-readable medium related to the methods.

Background

Wireless ranging may involve determining a distance between a first device and a second device. Such methods may, for example, be employed with ultra-wideband (UWB) devices according to IEEE 802.15.4z.

Methods of wireless ranging, for example as employed in UWB, may be based on time-of-flight (ToF) measurements. In such methods, a known sequence of symbols may be cross-correlated with a sequence of symbols received over the air, yielding a channel impulse response (CIR) of the radio channel between the devices between which ranging is performed. From a peak in the channel impulse response, the timing of the received sequence may be determined.

If the sequence has perfect autocorrelation properties, which may be the case for a SYNC/SHR sequence of an UWB packet, there will only be one peak in the autocorrelation of the sequence, allowing accurate determination of the timing of the received sequence.

However, it may also be useful to use sequences not having perfect autocorrelation properties, such as in the case of an STS sequence of an UWB packet. Such sequences may have sidelobes in their respective autocorrelations, which may lead to inaccurate determination of the time of flight, especially in a multi-path environment.

Summary

In view of the above, an objective of the present inventive concept is to provide a method that allows for reduced sidelobes in the present context.

According to a first aspect of the present inventive concept, there is provided a method of generating a sequence of symbols for sidelobe reduction when the generated sequence of symbols is cross-correlated with a received sequence of symbols, said method comprising obtaining a nominal sequence of symbols; determining one or more sidelobes in the autocorrelation of said nominal sequence of symbols targeted for reduction; for a sidelobe of said one or more sidelobes targeted for reduction selecting a bit of a symbol of said sequence of symbols; evaluating, whether modifying the selected bit would reduce said sidelobe without modifying any other sidelobe targeted for reduction; conditional on said evaluating, modifying the selected bit.

This way, a modified sequence of symbols may be obtained. The modified sequence of symbols may lead to the one or more sidelobes being of lower magnitude when cross-correlated with a received sequence of symbols, such as sequence of symbols received over the air. Furthermore, the present method has an advantage of not requiring a re-computation of the autocorrelation of the modified sequence. This reduces the complexity of the method and may therefore allow for the method to be carried out in the case of hardware and/or time constraints. In particular, this may allow for the method to be carried out in conjunction with the receiving of a sequence over the air.

The method may further comprise determining an autocorrelation of said nominal sequence of symbols with respect to at least the one or more sidelobes targeted for reduction; determining a bit modification budget for each of the one or more sidelobes targeted for reduction based on the determined autocorrelation, wherein, upon said modifying of said selected bit, the corresponding bit modification budget is decreased, and wherein, for each sidelobe of said one or more sidelobes targeted for reduction, said selecting, said evaluating, and said modifying is repeated until the corresponding bit modification budget is exhausted.

This may allow for more efficient sidelobe reduction, as the algorithm may be steered to reduce particular sidelobes with a desired level of reduction.

Said determining of said bit modification budget being based on a magnitude of the respective sidelobe targeted for reduction, preferably in relation to desired reduced magnitude of the sidelobe targeted for reduction.

Said bit modification budget may be written:

$$d_M = ceil\left(\left(\frac{|\boldsymbol{C}[M]|}{m} - T\right) \times n\right)$$

wherein $d_M$ is the bit modification budget for sidelobe having index $M$, $\boldsymbol{C}[M]$ is the autocorrelation of the nominal sequence of symbols for the sidelobe having index *M*, *m* is the number of symbols in the sequence of symbols, *T* is a threshold defining a desired magnitude of the sidelobe targeted for reduction, and *n* is the number of bits in each symbol.

This may allow for a particularly efficient way of constructing the bit modification budget.

Said determining of said autocorrelation may be made only for the sidelobes targeted for reduction. This may allow for more efficient operation of the algorithm.

Said one or more sidelobes targeted for reduction may be ordered in descending bit modification budget order. This may allow for the sidelobes having the largest magnitudes to be reduced first, which may be beneficial if the time for executing the algorithm is limited.

Said evaluating may be based on the criterion:

$$S \times (a_{k+M}a_k + a_{k+2M}a_{k+M}) > 0$$

and

$$|a_k a_{k-M} + a_{k+M}\hat{a}_k + a_{k+2M}a_{k+M}| < |a_k a_{k-M} + a_{k+M}a_k + a_{k+2M}a_{k+M}|$$

and

$$\forall j \in \mathcal{F}/M \ |a_k a_{k-j} + a_{k+j}\hat{a}_k + a_{k+2j}a_{k+j}| = |a_k a_{k-j} + a_{k+j}a_k + a_{k+2j}a_{k+j}|$$

wherein $a_i$, are the bits of the symbols of the sequence of symbols, *M* is an index of the sidelobe is targeted for reduction, S is a sign of the sidelobe targeted for reduction, *k* is an index of the selected bit, and $\forall_j \in \mathcal{F}/M$ indicates indices j of the sidelobes $\mathcal{F}$ targeted for reduction excepting the sidelobe *M*.

This may be a particularly beneficial way of carrying out the method.

Said selecting of said bit of said symbol of said sequence of symbols may made in a randomized fashion. This may allow for increased security.

According to a second aspect, there is provided a method employable in wireless ranging, comprising: receiving a sequence of symbols transmitted over the air; generating a sequence of symbols for sidelobe reduction when the generated sequence of symbols is cross-correlated with the received transmitted sequence of symbols according to the first aspect; and cross-correlating the generated sequence of symbols with the received sequence of symbols. This aspect may generally present the same or corresponding advantages as the former aspect.

Said generating may be performed in conjunction with said receiving.

Said sequence of symbols may be transmitted over the air using ultra-wideband, UWB, technology. This may be a particularly application of the present inventive concept.

Said sequence of symbols transmitted over the air may be an STS sequence. This may be a particularly beneficial application of the present inventive concept.

According to a third aspect, there is provided a device configured to perform the method the first aspect or the method of the second aspect. This aspect may generally present the same or corresponding advantages as the former aspects.

According to a fourth aspect, there is provided a non-transitory computer-readable medium comprising instructions which, when executed by a computer or processor, causes the computer or processor to carry out the method of any the first aspect, or, a non-transitory computer-readable medium comprising instructions which, when executed by a computer or processor coupled to a radio receiver, causes the computer or processor coupled to the radio receiver to carry out the method of the second aspect.

Brief description of the drawings

The above, as well as additional objects, features, and advantages of the present inventive concept, will be better understood through the following illustrative and non-limiting detailed description, with reference to the appended drawings. In the drawings like reference numerals will be used for like elements unless stated otherwise.

Fig. 1 shows a system comprising a first device and a second device.
Fig. 2 shows a method example.
Fig. 3 shows a further method example.

Detailed description

Localization of a device is crucial in various applications such as asset tracking, human behavior monitoring, and keyless entry. Accurate ranging between two devices (often referred to as initiator and reflector) is essential in order to perform a precise localization.

Ranging may often be performed in the multipath environment, where due, e.g., reflections from objects in the environment, a superposition of transmitted signal in line-of-sight (LoS) path and non-LoS (NLoS) paths are seen at the receiver.

There are various systems that can be used for wireless ranging, as known in the art.

Ultra-wide band (UWB) according to IEEE 802.15.4z is a popular candidate for ranging with high accuracy. Compared to narrow band systems such as Bluetooth or Zigbee, UWB benefits from its much larger bandwidth (compare 500MHz band width of UWB with 80MHz of Bluetooth). This yields to a high time-resolution that can be exploited for distinguishing the LoS from the NLoS paths, resulting in the high accuracy of ranging.

In the present disclosure, the present inventive concept is presented in the context of UWB. However, the present inventive concept is in no way limited thereto.

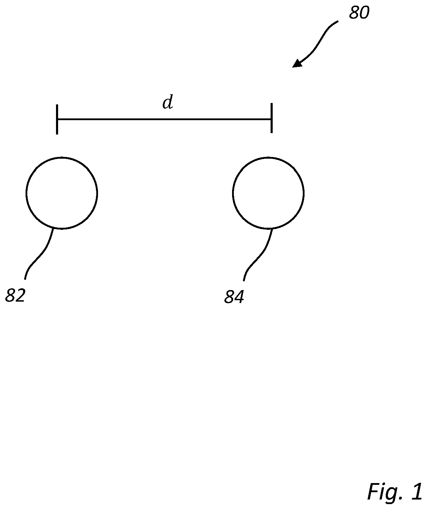

Fig. 1 shows a system 80 comprising a first device 82 and a second device 84. For example, the first device 82 and the second device 84 may be UWB devices, as known in the art.

For simplicity, the present disclosure is presented in relation to a system comprising two devices. However, as the skilled person would readily understand, the present inventive concept would be equally applicable to a system comprising any plurality of devices.

Ranging, i.e., estimating a distance $d$ between the first device 82 and the second device 84, for may be based on determining a time of flight (ToF) between the first device 82 and the second device 84 based on two-way radio transmission between the first device 82 and the second device 84, as well-known in the art. Such two-way ranging is, e.g., foreseen in the UWB IEEE 802.15.4z standard.

Hereby, the first device 82, acting as an initiator, may send a first packet, which may be referred to as an initiator packet, to the second device 84, whereupon the second device 84, acting as responder (also referred to as a reflector), sends a second packet, which may be referred to as a responder packet, back to the initiator 82.

The initiator 82 may measure a round-trip time $T_{round}$ as a time difference between the moment that the first packet is sent from the initiator 82 and the moment that the second packet is received by the initiator 82.

Each of the first packet and the second packet may comprise multiple short pulses that are sampled and transmitted, where the receiving device (initiator 82 or responder 84, as applicable) cross-correlates the received signal with known nominal samples of the transmitted pulse pattern, yielding the computation of the channel impulse response (CIR).

Hereby, the receiving device may correlate the received signal with a locally stored template of the symbol, typically a pattern of {0,1, -1} values that are used for transmission of the pulses. This computation is referred to as cross correlation of the received signal and the reference template, corresponding to a nominal sequence of symbols matching the transmitted symbols. One way of computing the cross correlation is by shifting the reference template through the received signal. For each shift the values of the template and the received signal are multiplied and then summed.

Alternatively, the CIR may be estimated using a pseudo inverse of the sequence, as known per se in the art.

In UWB, for example, the CIR can be estimated from the synchronization symbols (SYNC also called as SHR) of the UWB packet, and/or from scrambled time sequence (STS) symbols of the UWB packet. The STS section is a section of the packet designed to make the range estimation secure against attacks. The SYNC and STS section of a packet contains the symbols that are known by the receiving device.

Overall, the receiver may estimate the CIRs from both SYNC (SHR) and STS sequences.

The nominal sequence of symbols is known to both the device sending a packet and the device receiving the packet. For example, the sequence may be previously known, which may be the case for UWB SHR (SYNC) symbols. For generating the STS sequence, the transmitter and the receiver may exchange messages on a control channel and agree on a given seed to generate the STS sequence. Once the seed is known, the sequence can be generated by the transmitter and is used to construct the packet and send it. Furthermore, the STS sequence can be generated in the receiver as a reference template to perform the correlation and estimate the CIR from the STS sequence.

The correlation is maximized when the shifted pattern and the received symbols are matched. This will happen when the reference template is shifted by the delay introduced by the channel in which the packet passed through. Therefore, the peak of such correlation is an indicator of the delay of the channel which is proportional to the range between two devices.

The initiator 82 and the responder 84 may record the respective transmit times of the first packet and the second packet. The initiator 82 and the responder 84 may determine respective arrival times of the first packet and of the second packet by finding a peak in the calculated channel impulse response, corresponding to a direct transmission path between the devices. Such a peak may, e.g., be found using leading-edge (LE) algorithms in combination with an interpolation algorithm, as known per se.

The initiator 82 may record the time of arrival of the second packet and the time of departure of the first packet and a difference of the two may be calculated as $T_{round}$.

The responder 84 may record the time of departure of the second packet and the time of arrival of the first packet and a difference of the two may be calculated as $T_{reply}$.

Then, the time of flight ToF can be computed as $ToF = (T_{round} - T_{reply})/2$.

The symbols in the SYNC (SHR) section are designed to have an ideal autocorrelation property, in the sense that each symbol is orthogonal to bit-shifted versions of the symbol. This means that the autocorrelation function only has only one peak, where there is no shift.

However, the STS symbols are the output of an encryption protocol, hence, the STS sequence does not necessarily have an ideal autocorrelation property. This means that each symbol is not necessarily orthogonal to its shifted version. This leads to some side lobes in the autocorrelation function of an STS sequence.

In a multipath environment, a transmitted packet passes through multiple paths, hence, a receiver observes a superposition of several versions of the transmitted packet having traveled different paths and thus having different delay.

After computing the correlation with the sequence of pattern for the SYNC (SHR) section, due to the perfect autocorrelation property of the SHR sequence, it is possible for the paths to be resolved and the LoS path corresponding to the range can be estimated.

However, due to the side lobes of the STS sequence, it is possible that the side lobe of a different path (NLoS path) than the LoS path interferes with the LoS path. In this case, the accuracy of the range estimation reduces. Furthermore, if the NLoS paths are much stronger than the LoS path, the strong side lobs of the NLoS path which are close to its main lobe may be misdetected as the LoS path by the ranging algorithm. This misdetection results in a large ranging error. There are some practical scenarios where the multipath component is much stronger than the LoS path, e.g., transmitter (mobile) is at the back pocket of a user and the user is approaching the receiver (car).

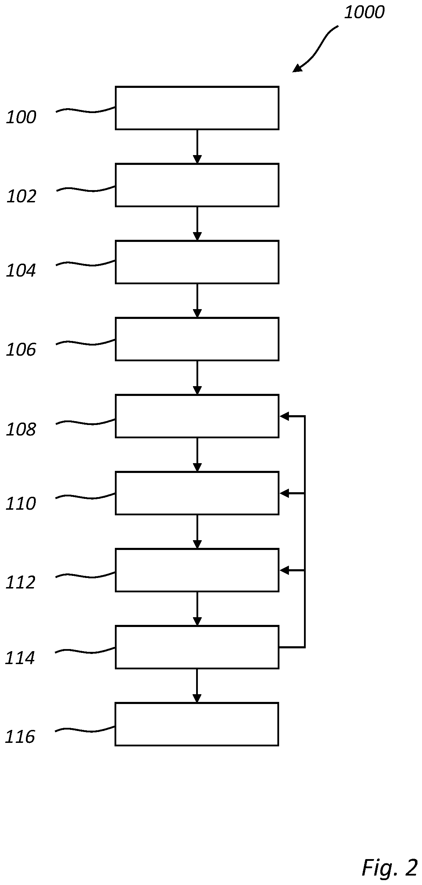

Fig. 2 illustrates a method example 1000 of generating a sequence of symbols. A purpose of the method is to generate a sequence of symbols having reduced sidelobes when cross correlated with a received sequence of symbols. For example, the received sequence of symbols may be received or may have been received over the air.

The method example 1000 may operate by modifying one or more bits of the symbols of the nominal sequence of symbols. By cross-correlating the modified sequence of symbols, instead of the nominal sequence of symbols, with the sequence of symbols received over the air, sidelobes may be mitigated without a need to modify the transmitted sequence of symbols.

Modifying of bits may also be referred to as flipping bits or bit flipping.

Digital sidelobe mitigation as per the present disclosure may thus prevent ranging errors in time of flight ranging using a sequence of symbols not having perfect autocorrelation properties, such as a UWB packet STS CIR sequence. The proposed algorithm is based on bit modification (bit flipping) and proposes the modification of some of the bits in the nominal sequence of symbols at the receiver side. By this bit flipping, the reference template used at the receiver for computing the cross-correlation and estimation of the CIR of is changed.

The method example 1000 may be particularly useful for UWB devices.

At 100 a nominal sequence of symbols are obtained. For example, the nominal sequence of symbols may be generated based on available data, such as an agreed-upon seed, received from a different device, or be previously known, as described above.

Typically, the nominal sequence of symbols may be an STS sequence of a UWB packet.

The sequence may comprise a plurality of $m$ symbols $S_1, S_2, ... S_m$ wherein each of the $m$ symbols comprises $n$ bits. The bits of each symbol of the sequence of symbols may be denoted $a_i$, wherein $i = 1, 2, 3... n$, are the bits of the symbols of the sequence of symbols.

Typically, especially in the case of UWB transmission, each bit $a_i$ may assume the values -1, 0, or 1.

In other words, a symbol may contain a pattern of {0,1, -1} values {$a_1, ..., a_k$}.

The value 1 may correspond to samples of a short pulse p(t) being sent over the air. The value 0 may correspond to zero value samples being sent over the air. The value -1 may correspond to samples of a short pulse -p(t) being sent over the air.

At 102, one or more sidelobes in the autocorrelation of said nominal sequence of symbols targeted for reduction are determined. Denoting an autocorrelation of the bits of the nominal sequence of symbols $S_1, S_2, ... S_m$ as $C[M]$, each sidelobe $M$ corresponds to a shift of one bit in the autocorrelation, so that M = 1 corresponds to the main lobe, $M = 2$ to the first sidelobe, $M = 3$ to the second sidelobe, $M = 4$ to the third sidelobe, and so on, up to $M = n$. Thus, the determining of the one or more sidelobes targeted for reduction may correspond to determining one or more indices $M \in \{2, ..., n\}$.

At 104, an autocorrelation of said nominal sequence of symbols with respect to at least the one or more sidelobes targeted for reduction may be determined. For example, the autocorrelation may be calculated using methods well-known per se. Alternatively, the autocorrelation may be pre-known, or received from a different device.

For example, the full autocorrelation $C[M]$ may be determined for all values of $M = 1, 2, ..., n$. Alternatively, $C[M]$

may be determined only for the one or more sidelobes *M* targeted for reduction, again using methods known per se.

Where applicable, for example in the case of UWB, the determining of the autocorrelation may take into account parameters such as a spreading factor, which may depend on the used UWB mode, and/or an oversampling factor, which may depend on a receiving UWB radio, as known to the skilled person.

At 106, a bit modification budget $d_M$ for each of the one or more sidelobes targeted for reduction may be determined, for example calculated, based on the autocorrelation $C[M]$ determined at 104.

As a bit modification budget may be understood how many bits need to be modified in the sequence in order to reach a desired reduction of a targeted sidelobe.

The bit modification budget may also be called a bit flipping budget.

Typically, the determining of the bit modification budget may be based on a magnitude, corresponding to the autocorrelation $C[M]$, of the respective side-lobe *M* targeted for reduction, preferably in relation to desired reduced magnitude of the sidelobe targeted for reduction. For example, the bit modification budget $d_M$ may be determined according to

$$d_M = ceil\left(\left(\frac{|C[M]|}{m} - T\right) \times n\right)$$

wherein $d_M$ is the bit modification budget for sidelobe having index *M*, *C[M]* is the autocorrelation of the nominal sequence of symbols for the sidelobe having index *M*, *m* is the number of symbols in the sequence of symbols, *T* is a threshold defining a desired magnitude of the sidelobe targeted for reduction, and *n* is the number of bits in each symbol.

*T* may this be seen as a threshold that defines the desired value of the targeted side lobe to not impact the ranging performance. The value of *T* can be selected using simulations/measurements.

In case of there being more than one sidelobe *M* targeted for reduction, the bit modification budget $d_M$ may be computed for each targeted side lobe, forming a lists of bit modification budgets.

At 108, a sidelobe *M* of the one or more sidelobes targeted for reduction may be selected. In other words, a sidelobe targeted for reduction may be understood as a sidelobe to be mitigated.

Typically the one or more sidelobes targeted for reduction may ordered in descending bit modification budget $d_M$ order, so the sidelobe *M* having the largest bit modification budget is selected first.

In other words, the list of bit modification budgets may be sorted in a descending order. This means that side lobe mitigation will start from the side lobe which has the largest bit modification budget (side lobe with largest amplitude).

This 108 may be an iterative step, so that once reduction of sidelobe M has been concluded, the method example may return to step 108 and a further sidelobe may be selected for reduction.

At 110, a list of symbols may be constructed, the list comprising a plurality of symbols on which the method example will operate, i.e., symbols in which bits may be modified by the method example. For example, the list of symbols may comprise all the symbols of the nominal sequence of symbols.

The order of the list of symbols may be randomized. This may improve security of the algorithm. For example, the randomization may be performed using the well-known Fisher-Yates algorithm, which may be efficiently implemented in hardware.

The first symbol of the list of symbols may be selected. If no list of symbols has been constructed, a symbol of the plurality of symbols of the nominal sequence of symbols may be directly selected. Thus, in either case a symbol of the plurality *m* of symbols of the nominal sequence of symbols is selected.

This 110 may be an iterative step, so that once reduction of the selected sidelobe M with respect to the selected symbol has concluded, the method example may return to step 110 and a further symbol may be selected, e.g., from the list of symbols. This may be an inner loop with respect to step 108.

At 112, a bit *k* is selected from the plurality *n* of bits of the symbol selected at 110.

A list of bits may be constructed, the list comprising bits of the selected symbol being candidates for modification.

For example, the list of bits may comprise all the bits of the nominal sequence of symbols. However, preferably, denoting with $M_{max}$ the highest sidelobe index M of the sidelobes targeted for reduction, the bit *k* of the selected symbol may be selected from the range $M_{max} + 1, M_{max} + 2, ..., n - 2 M_{max}$. This may allow step 114 to operate more efficiently.

The order of the list of bits may be randomized. This may improve security of the algorithm. For example, the randomization may be performed using the well-known Fisher-Yates algorithm, which may be efficiently implemented in hardware.

The first bit of the list of bits may be selected. If no list of bits has been constructed, a symbol of the plurality of symbols of the nominal sequence of symbols may be directly selected. Thus, in either case a bit of the plurality *n* of bits of the selected symbol may be selected.

This 112 may be an iterative step, so that when the selected bit has been handled by the method example, the method example may return to step 112 and a further bit may be selected, e.g., from the list of bits. This may be an inner loop with respect to step 110.

At 114, an evaluation is performed whether modifying the selected bit would reduce the selected sidelobe M without modifying any other sidelobe targeted for reduction. If the evaluation turns out in the positive, the selected bit is modified.

The evaluating at 114 may be based on a pre-determined criterion relating to the contribution of the selected bit to the sidelobe targeted for reduction. The pre-determined criterion may give conditions under which the selected bit should be modified to reduce its impact on the targeted side lobe.

In particular, the evaluating may be based on the criterion:

$$S \times (a_{k+M} a_k + a_{k+2M} a_{k+M}) > 0 \text{ and} \qquad (A)$$

$$|a_k a_{k-M} + a_{k+M} \hat{a}_k + a_{k+2M} a_{k+M}| < |a_k a_{k-M} + a_{k+M} a_k + a_{k+2M} a_{k+M}| \qquad (B)$$

and

$$\forall j \in \mathcal{F}/M \ |a_k a_{k-j} + a_{k+j} \hat{a}_k + a_{k+2j} a_{k+j}| = |a_k a_{k-j} + a_{k+j} a_k + a_{k+2j} a_{k+j}| \qquad (C)$$

wherein $a_i$, are the bits of the symbols of the sequence of symbols, M is an index of the sidelobe is targeted for reduction, S is a sign of the sidelobe targeted for reduction, $k$ is an index of the selected bit, and $\forall_j \in \mathcal{F}/M$ indicates indices j of the sidelobes $\mathcal{F}$ targeted for reduction excepting the sidelobe $M$.

If the above three criteria (A), (B), (C) all are fulfilled, the selected bit $k$ is modified so that

$$\hat{a}_k = -a_{k+2M}$$

Thus, $\mathcal{F}$ denotes a set containing the indices of the side targeted for reduction. As an example, $\mathcal{F} = \{1,2,3\}$ means that first, second and third side lobes are targeted for reduction.

The above conditions allow for reduction of the impact of the $k$-th bit on the current targeted side lobe (component $M$ in the set $\mathcal{F}$ ), while not changing the impact of the $k$-th bit on the other targeted side lobes (components of the set T excluding the component M).

In particular the first inequality A may check that $k$-$th$ bit contributes to the targeted side lobe for mitigation, the second inequality B may ensure that after modifying the $k$-$th$ bit the targeted side lobe reduces, and the equation C may ensure that reducing a given targeted side lobe, does not change the other targeted side lobes.

Hereby, there is no need to recompute the autocorrelation of the sequence as modified to find out the amplitude of the target side lobs after the bit modification.

It may be seen that selecting the bit k in the range $M_{max} + 1, M_{max} + 2, ..., n - 2 M_{max}$ (cf. above), or, equivalently so that M + 1 $\leq k \leq n$ - 2M, or, equivalently so that $k$ - $M \geq 1$ and $k + 2M \leq n,$ allows the conditions above only to depend on the currently selected symbol.

Upon modification of the selected bit, the bit modification budget for the selected side lobe may be decreased. In particular, the bit modification budget for the selected side lobe may be decreased by 2, corresponding to the reduction of the side lobe.

In more detail, the above criterion with sub-criteria A, B, C may be understood and derived as follows. As per the above, it is assumed that the sidelobe with index $M$ is targeted for reduction. The sequence comprising the sidelobe targeted for reduction comprises the bits

$$a_k \qquad \dots \qquad a_{k+M} \qquad \dots \qquad a_{k+2M} \qquad \dots$$

wherein it is assumed that the bits $a_k$,..., $a_{k+2M}$ are within the selected symbol.

The side lobe with index M, i.e., the M-th side lobe, corresponds to correlating the sequence with its M-th shifted version, corresponding to element-wise multiplication of the following sequences

$$\dots \quad a_k \quad \dots \quad a_{k+M} \quad \dots \quad a_{k+2M} \quad \dots$$

$$\times \quad \times \quad \times \quad \times \quad \times \quad \times \quad \times$$

$$\dots \quad a_{k-M} \quad \quad a_k \quad \quad a_{k+M}$$

where the first, upper, sequence is the obtained nominal sequence and the second, lower, sequence is the M-th shifted version of that sequence. One can see that the value of M-th side lobe can be written as:

$$other\ terms + a_k a_{k-M} + a_{k+M} a_k + a_{k+2M} a_{k+M} \qquad (1)$$

It can be observed that in the term $a_{k+M}a_k + a_{k+2M}a_{k+M}$, $a_{k+M}$ is a common term, hence, if $a_k = a_{k+2M}$, by flipping of $a_k$ at the receiver (flipping of $a_k$ in the M-th shifted version of the sequence), i.e., $\hat{a}_k = -a_{k+2M}$, one can make the term $a_{k+M}a_k + a_{k+2M}a_{k+M}$ to be zero. In other words, this term is nulled.

The condition $S \times (a_{k+M}a_k + a_{k+2M}a_{k+M}) > 0$ where $S$ is a sign of the sidelobe targeted for reduction ensures that the term that is attempted to be nulled contributes to the side lobe. As an example, if the M-th side lobe is positive, i.e., $(a_{k+M}a_k + a_{k+2M}a_{k+M}) > 0$, this means that $a_{k+M}a_k + a_{k+2M}a_{k+M} = 2$ and $a_k = a_{k+2M}$ (this can be concluded as the values of bits are either +1/-1). In this case, $\hat{a}_k = -a_{k+2M}$, can reduce the 2 to 0. Equivalently, if the M-th side lobe is negative, i.e., $(a_{k+M}a_k + a_{k+2M}a_{k+M}) < 0$, this means that $a_{k+M}a_k + a_{k+2M}a_{k+M} = -2$ and $a_k = a_{k+2M}$ (this can be concluded as the values of bits are either +1/-1). In this case $\hat{a}_k = -a_{k+2M}$, can reduce the -2 to 0.

Therefore, the sub-criterion (A) ( $S \times (a_{k+M}a_k + a_{k+2M}a_{k+M}) > 0$ ) checks that *k-th* bit contributes to the targeted side lobe for reduction, hence, $a_k$ can be a candidate for bit modification (bit flipping).

Side lobe reduction implies that the strength, or, in other words the absolute of the side lobe is reduced. The absolute of M-th side lobe given in sub-criterion (B) can be upper bounded as

$$|other\ terms + a_k a_{k-M} + a_{k+M} a_k + a_{k+2M} a_{k+M}| \qquad (2)$$
$$\leq |other\ terms| + |a_k a_{k-M} + a_{k+M} a_k + a_{k+2M} a_{k+M}|$$

where the inequality can be proven based on employing the well-known triangle inequality. We approximate the absolute of M-th side lobe (left hand side of (2)) by the upper bound, hence,

$$\text{Strength of M-th side lobe} \approx |other\ terms| + |a_k a_{k-M} + a_{k+M} a_k + \qquad (3)$$
$$a_{k+2M} a_{k+M}|$$

As flipping (modifying) of $a_k$ does not change |*other terms*| due to the fact that *other terms* do not contain the terms depending on $a_k$, the condition $|a_k a_{k-M} + a_{k+M}\hat{a}_k + a_{k+2M}a_{k+M}| < |a_k a_{k-M} + a_{k+M}a_k + a_{k+2M}a_{k+M}|$ can ensure that the strength of M-th side lobe reduces without re-computation of the *other terms.*

Therefore, the second sub-criterion (B) ($|a_k a_{k-M} + a_{k+M}\hat{a}_k + a_{k+2M}a_{k+M}| < |a_k a_{k-M} + a_{k+M}a_k + a_{k+2M}a_{k+M}|$) ensures that after flipping the *k-th* bit the targeted side lobe reduces without requiring to re-compute the overall cross correlation for the targeted side lobe.

With the same reasoning as explained above, the side lobe with index j, i.e., the j-th side lobe, corresponds to element-wise multiplication of the following sequences,

$$\dots \quad a_k \quad \dots \quad a_{k+j} \quad \dots \quad a_{k+2j} \quad \dots$$

$$\times \quad \times \quad \times \quad \times \quad \times \quad \times \quad \times$$

$$\dots \quad a_{k-j} \quad \quad a_k \quad \quad a_{k+j}$$

where the first, upper, sequence is the obtained nominal sequence and the second, lower, sequence is the j-th shifted version of that sequence.

One can see that the value of the j-th side lobe can be written as:

$$other\ terms + a_k a_{k-j} + a_{k+j} a_k + a_{k+2j} a_{k+j} \qquad (4)$$

Using the same derivation given in (1)-(3),

$$\text{Strength of the j-th side lobe} \approx |other\ terms| + |a_k a_{k-j} + a_{k+j} a_k + \qquad (5)$$
$$a_{k+2j} a_{k+j}|$$

As flipping (modifying) of $a_k$ does not change $|other\ terms|$ due to the fact that *other terms* do not contain the terms depending on $a_k$, the condition $|a_k a_{k-j} + a_{k+j} \hat{a}_k + a_{k+2j} a_{k+j}| = |a_k a_{k-j} + a_{k+j} a_k + a_{k+2j} a_{k+j}|$ can ensure that the strength of j-th side lobe in the set $\mathcal{F}/M$ does not change by flipping (modifying) of bit $a_k$ without re-computation of *other terms.*

Therefore, the third sub-criterion (C) ($|a_k a_{k-j} + a_{k+j} \hat{a}_k + a_{k+2j} a_{k+j}| = |a_k a_{k-j} + a_{k+j} a_k + a_{k+2j} a_{k+j}|$) ensures that after flipping the k-th bit which reduces given targeted side lobe, other targeted side lobes do not change.

The selected bit may be removed from the list of bits and the method example may return to 112, wherein a new bit may be selected, e.g., from the list of bits.

If the list of bits is empty, the method example may return to 110, wherein the selected symbol may be removed from the list of symbols and a new symbol may be selected, e.g., from the list of symbols.

If the list of symbols is empty, or the bit modification budget for the selected sidelobe is exhausted, the method example may return to 108, wherein a different sidelobe targeted for reduction may be selected, until all sidelobes targeted for reduction have been handled by the method example.

Thus, for each sidelobe of the one or more sidelobes targeted for reduction, the selecting of a bit, the evaluating according to the above, and the conditional modifying of the is repeated until the corresponding bit modification budget is exhausted.

At 116, the sequence of symbols as modified by the method example may be output.

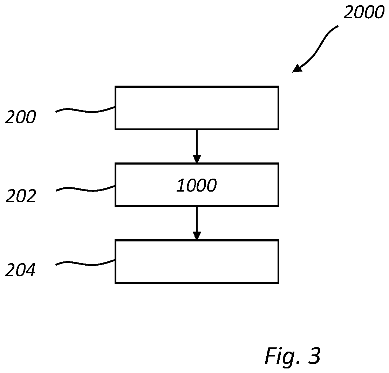

The method example 1000 of Fig. 2 may be part of a method example 2000, as shown in Fig. 3.

At 200, a sequence of symbols transmitted over the air may be received. The sequence of symbols may be transmitted over the air using ultra-wideband, UWB, technology.

At 202, a sequence of symbols may be generated according to the method example 1000 of Fig. 2.

At 204, the generated sequence of symbols may be cross-correlated with the sequence of symbols received over the air.

Preferably, the generation, and preferably also the cross-correlating may be performed in conjunction with the receiving.

The method example 1000 and/or the method example 2000 may be implemented in the first device 82 or the second device 84 (cf. Fig. 1), or in some other device comprising generic processor circuitry, such as a computer, where applicable in conjunction with radio receiving circuitry.

Further, there may be provided a non-transitory computer-readable medium comprising instructions which, when executed by a computer or processor, causes the computer or processor to carry out the method example 1000, or, a non-transitory computer-readable medium comprising instructions which, when executed by a computer or processor coupled to a radio receiver, causes the computer or processor coupled to the radio receiver to carry out the method example 2000.

As per the present disclosure, the targeted side lobes of the autocorrelation of and UWB STS may be reduced down to 2% of the original main lobe. This may be especially useful for targeted side lobes that are close to the main lobe in order to improve the ranging accuracy.

The proposed scheme may be completely feed forward with respect to computation of the autocorrelation of the sequence. This means that the receiver does not require the re-computation of the autocorrelation once it is decided to modify/flip a bit. In other words, once a bit is flipped there is no need to recompute the autocorrelation again. This feature reduces the implementation complexity of the algorithm significantly. Hereby, the computational complexity of the algorithm is very limited and is negligible compared to other signal processing operations at the receiver side. Further, the proposed scheme requires a limited memory (up to 2Kbyte of the memory for mandatory modes of the UWB4z standard with one STS segment), which is also not a bottleneck in current systems.

The proposed scheme may entail limited hardware/computational complexity and can effectively improve the performance of the range estimation in the context of the UWB ranging.

The proposed scheme may allow for not requiring any change/adjustment from the transmitter, and it does not impose any requirement on the current UWB standard, therefore, it may potentially be adopted by any standard compliant UWB system.

The invention can be employed in the UWB ranging system to improve the ranging accuracy when STS CIR is used. As secure ranging is based on evaluating the range estimation from both SHR and STS CIRs, the provided solution in this IDF has a direct application in secure ranging, especially for practical scenarios when the NLoS paths are stronger than the LoS path.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A method of generating a sequence of symbols for sidelobe reduction when the generated sequence of symbols is cross-correlated with a received sequence of symbols, said method comprising:

   obtaining (100) a nominal sequence of symbols;
   determining (102) one or more sidelobes in the autocorrelation of said nominal sequence of symbols targeted for reduction;
   for a sidelobe of said one or more sidelobes targeted for reduction:

   selecting (112) a bit of a symbol of said sequence of symbols;
   evaluating (114), whether modifying the selected bit would reduce said sidelobe without modifying any other sidelobe targeted for reduction;
   conditional on said evaluating, modifying the selected bit.

2. The method of claim 1, further comprising:

   determining (104) an autocorrelation of said nominal sequence of symbols with respect to at least the one or more sidelobes targeted for reduction;
   determining (106) a bit modification budget for each of the one or more sidelobes targeted for reduction based on the determined autocorrelation,
   wherein, upon said modifying of said selected bit, the corresponding bit modification budget is decreased, and
   wherein, for each sidelobe of said one or more sidelobes targeted for reduction, said selecting, said evaluating, and said modifying is repeated until the corresponding bit modification budget is exhausted.

3. The method of claim 2, wherein said determining (106) of said bit modification budget is based on a magnitude of the respective side-lobe targeted for reduction, preferably in relation to desired reduced magnitude of the sidelobe targeted for reduction.

4. The method of any one of claims 2-3, wherein said bit modification budget may be written:

$$d_M = ceil\left(\left(\frac{|C[M]|}{m} - T\right) \times n\right)$$

wherein $d_M$ is the bit modification budget for sidelobe having index $M$, $C[M]$ is the autocorrelation of the nominal sequence of symbols for the sidelobe having index M, m is the number of symbols in the sequence of symbols, $T$ is a threshold defining a desired magnitude of the sidelobe targeted for reduction, and $n$ is the number of bits in each symbol.

5. The method of any one of claims 2-4, wherein said determining of said autocorrelation is made only for the sidelobes targeted for reduction.

6. The method of any one of claims 2-5, wherein said one or more sidelobes targeted for reduction are ordered in descending bit modification budget order.

7. The method of any one of claims 1-6, wherein said evaluating (114) is based on the criterion:

$$S \times (a_{k+M}a_k + a_{k+2M}a_{k+M}) > 0$$

and

$$|a_k a_{k-M} + a_{k+M}\hat{a}_k + a_{k+2M}a_{k+M}| < |a_k a_{k-M} + a_{k+M}a_k + a_{k+2M}a_{k+M}|$$

and

$$\forall j \in \mathcal{F}/M \;\; |a_k a_{k-j} + a_{k+j}\hat{a}_k + a_{k+2j}a_{k+j}| = |a_k a_{k-j} + a_{k+j}a_k + a_{k+2j}a_{k+j}|$$

wherein $a_i$, are the bits of the symbols of the sequence of symbols, $M$ is an index of the sidelobe is targeted for reduction, S is a sign of the sidelobe targeted for reduction, $k$ is an index of the selected bit, and $\forall_j \in \mathcal{F}/M$ indicates indices j of the sidelobes $\mathcal{F}$ targeted for reduction excepting the sidelobe M.

8. The method of any one of claims 1-7, wherein said selecting of said bit of said symbol of said sequence of symbols is made in a randomized fashion.

9. A method (2000) employable in wireless ranging, comprising:

   receiving (200) a sequence of symbols transmitted over the air;
   generating (202) a sequence of symbols for sidelobe reduction when the generated sequence of symbols is cross-correlated with the received transmitted sequence of symbols according to any one of claims 1-8; and
   cross-correlating (204) the generated sequence of symbols with the received sequence of symbols.

10. The method of claim 10, wherein said generating is performed in conjunction with said receiving.

11. The method of any one of claims 9-10, wherein said sequence of symbols transmitted over the air is transmitted using ultra-wideband, UWB, technology.

12. The method of claim 11, wherein said sequence of symbols transmitted over the air is an STS sequence.

13. A device configured to perform the method of any one of claims 1-12.

14. A non-transitory computer-readable medium comprising instructions which, when executed by a computer or processor, causes the computer or processor to carry out the method of any one of claims 1-8, or, a non-transitory computer-readable medium comprising instructions which, when executed by a computer or processor coupled to a radio receiver, causes the computer or processor coupled to the radio receiver to carry out the method of any one of claims 9-13.

*80*

$d$

*82*          *84*

*Fig. 1*

Fig. 2

2000

200

202  1000

204

Fig. 3

Europäisches
Patentamt

European
Patent Office

Office européen
des brevets

## EUROPEAN SEARCH REPORT

**Application Number**

EP 24 22 2908

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/208147 A1 (HUAWEI TECH CO LTD [CN]) 2 November 2023 (2023-11-02) <br> * page 1 lines 28-32 <br> page 2 lines 1-6 <br> page 3 lines 2-6 <br> page 5 lines 24-27 <br> page 9 lines 8-11 * <br> ----- | 1-14 | INV. <br> H04L25/02 |
| X | US 2018/138993 A1 (KÜCHLER WOLFGANG [AT] ET AL) 17 May 2018 (2018-05-17) <br> * paragraphs [0037], [0210] - [0216]; claims 1,7 * <br> ----- | 1-14 | |
| A | CN 116 660 833 A (UNIV GUILIN ELECTRONIC TECH) 29 August 2023 (2023-08-29) <br> * paragraphs [0155] - [0160] * <br> ----- | 1-3,13, 14 | |

**TECHNICAL FIELDS SEARCHED (IPC)**

H04L

The present search report has been drawn up for all claims

| Place of search | Date of completion of the search | Examiner |
|---|---|---|
| Munich | 9 May 2025 | Belloni, Paolo |

EPO FORM 1503 03.82 (P04C01)

## ANNEX TO THE EUROPEAN SEARCH REPORT
## ON EUROPEAN PATENT APPLICATION NO.

EP 24 22 2908

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | Publication date | Patent family member(s) | Publication date |
|---|---|---|---|
| WO 2023208147 A1 | 02-11-2023 | CN 117014931 A | 07-11-2023 |
| | | WO 2023208147 A1 | 02-11-2023 |
| US 2018138993 A1 | 17-05-2018 | CN 108075994 A | 25-05-2018 |
| | | EP 3321712 A1 | 16-05-2018 |
| | | US 2018138993 A1 | 17-05-2018 |
| CN 116660833 A | 29-08-2023 | NONE | |

EPO FORM P0459

For more details about this annex : see Official Journal of the European Patent Office, No. 12/82